# EUROPÄISCHE PATENTANMELDUNG

(11) **EP 1 248 200 A1**
(43) Veröffentlichungstag der Anmeldung: **09.10.2002**
(21) Anmeldenummer: 01108711.1
(22) Anmeldetag: 06.04.2001
(51) Int. Cl.: G06F 12/14, G06F 1/00

(54) **Verriegelungsschaltung zur Verhinderung eines unzulässigen Zugriffs auf die Speichereinrichtung eines Prozessors**

(71) Anmelder: Micronas GmbH, 79108 Freiburg (DE)
(72) Erfinder: Koschella, Dietmar, Dipl.-Ing., 79211 Denzlingen (DE)
(74) Vertreter: Sauer, Wolfgang, Dipl.-Ing.

(57) **Zusammenfassung**

Eine Verriegelungsschaltung (1) ist mit einem Prozessor (2) und einer Speichereinrichtung (3), die insbesondere eine gemeinsame Baueinheit bilden, gekoppelt und verhindert einen unzulässigen Zugriff auf die Speichereinrichtung (3) dadurch, daß in einer Verknüpfungseinrichtung (5) interne und/oder externe Signale (s2, s3, s4; s1) zur Erkennung des unzulässigen Speicherzugriffs miteinander logisch verknüpft werden. Diese Signale sind Steuersignale des Prozessor-Speichersystems oder entsprechen dessen Betriebszustand. Bei einem als unzulässig erkannten Speicherzugriff sperrt die logische Verknüpfungseinrichtung (5) eine extern zugängliche Datenschnittstelle (6) und/oder unterbindet die für den Zugriff auf die Speichereinrichtung (3) erforderlichen Steuersignale (s5).

## Beschreibung

Die Erfindung betrifft eine Verriegelungsschaltung als Teil eines Schaltwerks, z. B. einer Prozessoreinheit - meist kurz als Prozessor oder CPU bezeichnet - mit zugehöriger Speichereinrichtung in einem Mikrokontroller. Prozessoren, Controller oder CPUs finden wegen ihrer vielseitigen Verwendbarkeit zunehmend Eingang in die verschiedensten Bereiche und übernehmen dort Aufgaben, die bisher mittels spezieller Einrichtungen auf mechanische, elektronische oder elektromechanische Weise gelöst wurden. Die aktuellen Lösungsverfahren verwenden dabei in der Regel die in monolithisch integrierter Schaltungstechnik vorliegenden Mikrokontroller (=µC). Die Anpassung an die jeweilige Aufgabe erfolgt über ein in der Speichereinrichtung abgelegtes Programm. Entsprechend dem jeweils ablaufenden Programm holt sich der Prozessor aus der Speichereinrichtung die erforderlichen Daten, beispielsweise Soll-, Grenz-, Vergleichswerte, Koeffizienten, Schlüsselinformationen usw., die er für die ablaufende Steueraufgabe benötigt. Ob die Speichereinrichtung ganz oder teilweise im Mikrokontroller mitintegriert ist oder eine separate Baueinheit bildet, hängt von dem Mikrokontrollertyp und dem erforderlichen Speicherbedarf ab.

Zur Optimierung der einzelnen Steueraufgaben und für Testzwecke sind in der Regel Möglichkeiten vorgesehen, über extern zugängliche Datenschnittstellen den bidirektionalen Datenverkehr zwischen dem Prozessor und der Speichereinrichtung zu verfolgen oder in den Datenverkehr gezielt einzugreifen. Ein derartiger Eingriff ist das Auslesen des Inhaltes der Speichereinrichtung. Ein anderer Eingriff ist das Umprogrammieren des Inhaltes der Speichereinrichtung, beispielsweise um bestimmte Programme oder Koeffizienten an neue Gegebenheiten anzupassen oder den Speicherinhalt ganz oder teilweise zu löschen. In vielen Fällen ist jedoch der externe Lese- oder Schreibzugriff nicht erwünscht, so daß ein unberechtigter Zugriff mindestens für einige Bereiche der Speichereinrichtung möglichst verhindert, zumindest sehr erschwert sein soll. Die Erfindung dient dazu, den Inhalt einer mit einem Prozessor gekoppelten Speichereinrichtung davor zu schützen, ausgelesen oder überschrieben zu werden.

Schutzsysteme mit geheimen Schlüsselwörtern sind in vielen Fällen nicht zweckmäßig. Entweder reserviert man für jedes einzelne Prozessor-Speichersystem ein eigenes Schlüsselwort, dann wird die Verwaltung der Bauelemente mit den vielen Schlüsselwörtern umständlich. Oder man verwendet ein universelles Schlüsselwort für eine große Anzahl von Prozessoren und zugehörigen Speichereinrichtungen, dann ist die Wahrscheinlichkeit aber sehr groß, daß das universelle Schlüsselwort legal oder illegal irgendwie bekannt wird und der Schutz für alle Gruppenmitglieder verloren geht. Bei einem universellen Schlüsselwort lohnt sich in vielen Fällen der Aufwand, mit elektronischen Hilfsmitteln ganz legal an das Schlüsselwort heranzukommen. Als Beispiel wird hier auf das unerlaubte Nachbauen von elektronischen Motor- oder Fahrwerksteuerungen im Kraftfahrzeugbereich hingewiesen, das in diesem Bereich auch als "Klonen" bezeichnet wird. Andere Beispiele für unzulässige Zugänge sind Änderungen bei Betriebsstundenangaben, Wartungsnachweisen oder bei Kraftfahrzeugen vor allen Dingen die Änderung der Kilometerleistung und dergleichen mehr.

Aufgabe der Erfindung ist es, einen Schutz gegen einen unzulässigen Zugriff auf die mit einem Prozessor gekoppelte Speichereinrichtung anzugeben, der insbesondere dort wirksam ist, wo der Prozessor und die Speichereinrichtung eine bauliche Einheit bilden oder gemeinsam monolithisch integriert sind als auch dort, wo der Prozessor und die Speichereinrichtung räumlich voneinander getrennt sind.

Diese Aufgabe wird erfindungsgemäß durch eine mit dem Prozessor und der Speichereinrichtung gekoppelten Verriegelungsschaltung mit den im Patentanspruch 1 angegebenen Merkmalen gelöst.

Die Verriegelungsschaltung weist zum Erkennen eines unzulässigen Speicherzugriffs eine logische Verknüpfungseinrichtung auf, der interne und externe Zustands- und Steuersignale des Prozessors, der Speichereinrichtung und gegebenenfalls anderer Quellen zugeführt sind und die bei einem als unzulässig erkannten Speicherzugriff eine extern zugängliche Datenschnittstelle oder die Leseund/oder Schreibfunktion der Speichereinrichtung oder beides sperrt, indem die erforderlichen Signale nicht erzeugt oder nicht weitergeleitet oder Sperrsignale erzeugt werden. Dabei kann sich der Schutz je nach Vorgabe auf die ganze Speichereinrichtung oder nur auf Teilbereiche davon erstrecken. Zudem kann für jeden Teilbereich ein unterschiedlicher Schutz vorgesehen werden, der entweder nur das Lesen oder nur das Schreiben oder sowohl das Lesen und das Schreiben sperrt. Der Schutz ist dabei so ausgelegt, daß er zunächst die Programmierung der Speichereinrichtung erlaubt, aber nach der dabei stattfindenden Aktivierung nur dann aufhebbar ist, wenn dieses durch den programmierten Schutz erlaubt wird. Zweckmäßigerweise wird die Schutzfunktion für die einzelnen Speicherbereiche dabei in einem geschützten, gegebenenfalls nicht mehr überschreibbaren Bereich der Speichereinrichtung selbst abgelegt. Die Erfindung hat den Vorteil, daß bei einem unzulässigen Zugangsversuch lediglich eine Sperrung stattfindet, die Funktionsfähigkeit bei einem eventuell nachfolgenden Normalbetrieb jedoch voll aufrechterhalten bleibt. Eine Funktionsblockierung, die ähnlich wie bei einer Kreditkarte nach drei Fehlversuchen ausgelöst wird oder gar eine Unbrauchbarmachung des Prozessor-Speichersystems oder von Teilen davon, beispielsweise durch nicht reversible Hardware-Maßnahmen, wie z.B. Leitungsauftrennung auf dem Chip, findet nicht statt. Bei einer zusätzlichen Verwendung von Schlüsselwörtern oder Verschlüsselungsprogrammen, deren wesentliche Bestandteile in Speicherbereichen untergebracht sind, die von extern nicht zugänglich sind, wird die Sicherheit gegen ein unerwünschtes Ausspähen noch erhöht.

Die Erfindung und vorteilhafte Ausführungsbeispiele werden nun anhand der Figuren der Zeichnung näher erläutert:
Fig. 1 zeigt im Blockschaltbild ein Prozessor-Speichersystem mit Verriegelungsschaltung,
Fig. 2 zeigt schematisch ein Speicherschutzregister mit Inhalt,
Fig. 3 zeigt schematisch einen Adressendekoder,
Fig. 4 zeigt eine erste Verriegelungsschaltung mit typischen Signalen,
Fig. 5 zeigt eine zweite Verriegelungsschaltung mit typischen Signalen,
Fig. 6 zeigt eine erste logische Verknüpfungseinrichtung,
Fig. 7 zeigt eine zweite logische Verknüpfungseinrichtung,
Fig. 8 zeigt Signale im Zeitdiagramm für den Freigabefall,
Fig. 9 zeigt Signale im Zeitdiagramm für den Sperrfall und
Fig. 10 zeigt in einer Tabelle typische Signale mit jeweiligem Logikpegel.

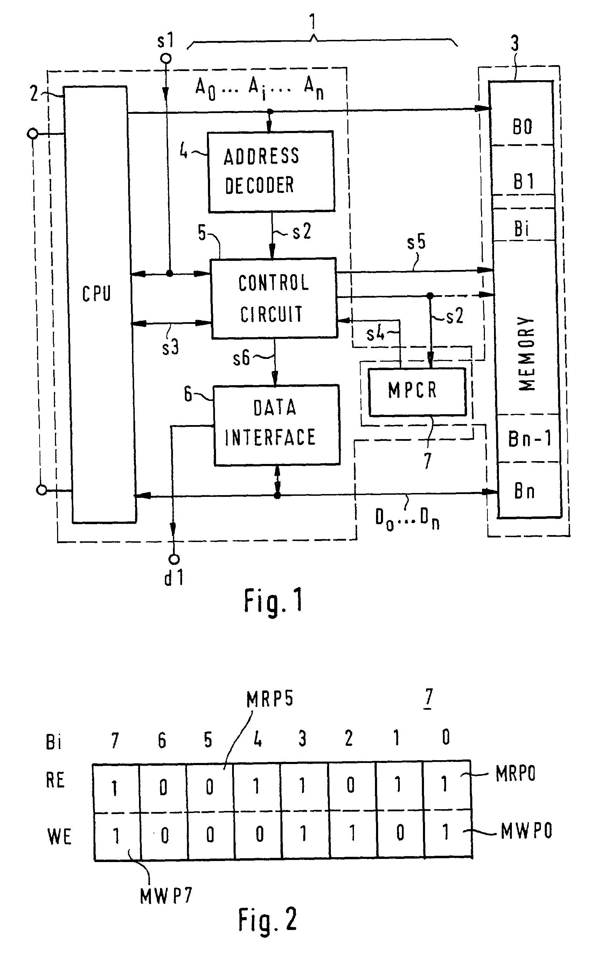

Im Blockschaltbild von Fig. 1 ist ein Ausführungsbeispiel einer Verriegelungsschaltung 1 im Zusammenhang mit einem Prozessor 2 (Central Processing Unit = CPU) und einer Speichereinrichtung 2 schematisch dargestellt. Die Verriegelungsschaltung, der Prozessor und die zugehörige Speichereinrichtung bilden dabei vorzugsweise eine bauliche Einheit, indem sie beispielsweise gemeinsam monolithisch integriert sind oder eine Hybridschaltung innerhalb eines gemeinsamen Gehäuses bilden. Bei hohem Speicherbedarf kann es zweckmäßig sein, aus Kostengründen die Speichereinrichtung nicht zusammen mit der CPU monolithisch zu integrieren, sondern eine standardisierte Speichereinrichtung innerhalb einer Hybridschaltung oder eines anderen Schaltungsverbundes zu verwenden. Somit ist die Verriegelungsschaltung 1 mit ihren Funktionsblöcken 4, 5, 6, 7 bis auf den Funktionsblock 7 in der Regel eine Zusatzschaltung des Prozessors 2. Die einzelnen Funktionsblöcke sind dabei ein Adressendekoder 4, eine logische Verknüpfungseinrichtung 5, eine extern zugängliche Datenschnittstelle 6 und ein Speicherschutzregister 7 (MPCR = Memory Protection Control Register), in dem die einzelnen Zugangsberechtigungen festgehalten sind.

Der Programmablauf im Prozessor 2 teilt sich in Befehls- und Datenzyklen auf. Während eines Befehlszyklus holt sich die CPU 2 den nächsten auszuführenden Befehl aus einer Programmfolge, die in der CPU oder der Speichereinrichtung 3 gespeichert ist. Auf den Befehlszyklus folgt ein oder mehrere Datenzyklen, in denen die CPU Daten holt oder Daten liefert. Vorzugsweise werden dabei Daten aus der Speichereinrichtung 3 gelesen und dorthin zurückgeschrieben, wobei die Leseund Schreiborte unterschiedlichen Bereichen Bi der Speichereinrichtung 3 zugeordnet sein können. Das Lesen und Schreiben kann natürlich je nach dem vorausgehenden Befehl auch an anderen, von der CPU adressierbaren Stellen erfolgen. Für die zu lösende Aufgabe ist jedoch angenommen, daß die zu schützenden Daten nur die Daten der Speichereinrichtung 3 sind. Dabei kann die Speichereinrichtung 3 in einzelne Bereiche B0, B1, ..Bi, ..Bn oder Segmente aufgeteilt sein, die bezüglich einem unzulässigen Speicherzugriff von außen unterschiedlich zu behandeln sind. So kann es erste Bereiche geben, die weder Lesen noch Schreiben zulassen, wobei der Begriff Schreiben sich auf das Überschreiben mit neuen Daten oder auf das Löschen von vorhandenen Daten bezieht. In zweiten Bereichen ist zwar das Lesen von Daten zugelassen, nicht aber das Schreiben. In dritten Bereichen ist das Schreiben von Daten, nicht aber das Lesen zugelassen. Und in vierten Bereichen gibt es keinerlei Beschränkung, also Lesen und Schreiben ist in diesen Speicherbereichen ohne Beschränkung zugelassen. Welche Schutzfunktion den einzelnen Speicherbereichen zukommt, ist im Speicherschutzregister 7, das im folgenden auch vereinfacht als MPCR bezeichnet wird, festgehalten. Dieses Speicherschutzregister 7 befindet sich als separates Register z.B. im Mikrokontroller oder vorzugsweise in der Speichereinrichtung 3. Die letztere Realisierung ist besonders zweckmäßig, weil dann dieses Register MPCR 7 in einem gegen Lesen und Schreiben geschützten Bereich untergebracht sein kann, wodurch die Schutzfunktion für die gesamte Speichereinrichtung 3 nach der erstmaligen Programmierung ohne besondere Vorkehrungen nicht mehr aufhebbar ist.

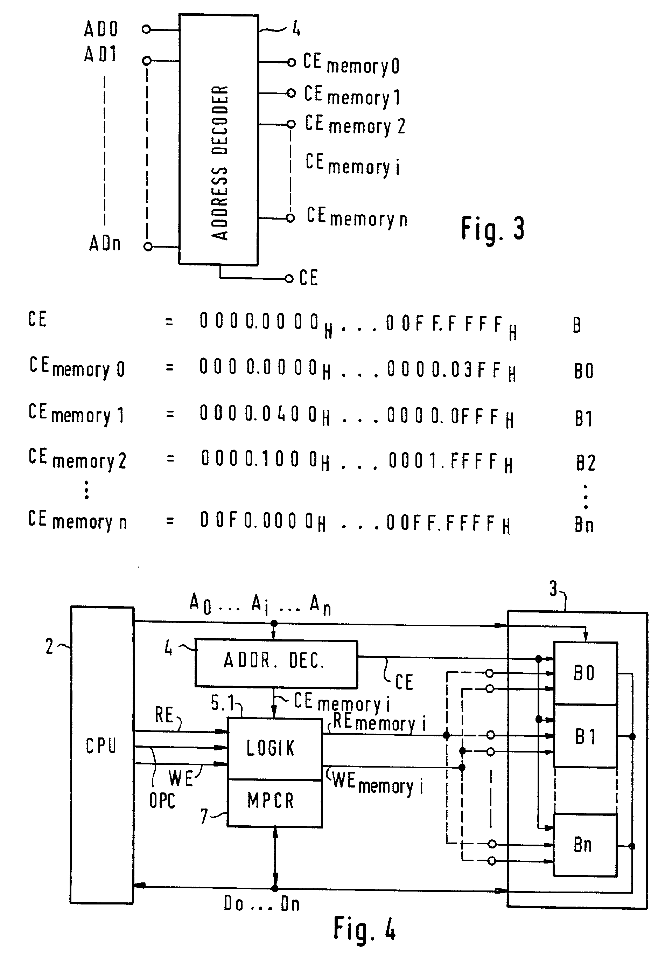

Die Definition der einzelnen Speicherbereiche erfolgt im Adressendekoder 4, der aus den zugeführten Adressen A₀ ... Aᵢ ... Aₙ je nach dem adressierten Speicherbereich Bi ein Bereichssignal s2 (vergl. z.B. das Bereichssignal CE_{memory i} in Fig. 3) bildet, wobei die Größe der Speicherbereiche über die Angaben der Bereichsgrenzen im Adressendekoder 4 vorgegeben ist.

Das Erkennen ob ein zulässiger oder unzulässiger Speicherzugriff vorliegt, erfolgt in der logischen Verknüpfungseinrichtung 5, die interne und externe Signale s2, s3, s4 bzw. s1 logisch miteinander verknüpft und aus dem Verknüpfungsergebnis einen zulässigen oder unzulässigen Zugriff erkennt. Die grundsätzliche Zugangsregelung für den adressierten Speicherbereich Bi wird aus dem Register 7 abgefragt.

Bei einem zulässigen Speicherzugriff wird die Speichereinrichtung 3 vom Prozessor 2 mittels der abgegebenen Steuersignale s3 bzw. s5 an der jeweiligen Adresse Aᵢ gelesen oder geschrieben, wobei die zu lesenden oder zu schreibenden Daten D₀ ... Dₙ gegebenenfalls an der extern zugänglichen Datenschnittstelle 6 als Daten d1 mitgelesen bzw. von dort aus in die Speichereinrichtung 3 geschrieben werden können. Standardisierte Beispiele für derartige Datenschnittstellen 6 sind unter der Bezeichnung "Test-Bus" oder "JTAG" (= Joint Test Action Group) bekannt. Ihre Aktivierung erfolgt über ein entsprechendes externes Signal s1, das bei Prozessoren und Mikrokontrollern meist sinngemäß mit "TEST" bzw. "JTAG" bezeichnet wird. Die Verknüpfungseinrichtung 5 zwischen der CPU 2 und der Speichereinrichtung 3 ist in diesem Fall gleichsam transparent und tritt nicht in Erscheinung, obwohl sie interne und externe Signale s2, s3, s4 bzw. s1 miteinander verknüpft.

Bei einem unzulässigen Speicherzugriff verhindert die Verknüpfungseinrichtung 5 die zum Lesen oder Schreiben der Speichereinrichtung 3 erforderlichen Signale s5 oder sperrt zumindest die extern zugängliche Datenschnittstelle 6 über ein Sperrsignal s6. Die Information über die Zugangsregelung des jeweiligen Speicherbereiches frägt die Verknüpfungseinrichtung 5 mittels des als Adresse dienenden Bereichssignals s2 vom Register 7 ab, das dann die jeweilige Zugangsregelung über das Signal s4 zurückmeldet.

Eine grundsätzliche Bedingung für die Zugangssicherung ist, daß ein Zugriff auf die Speichereinrichtung 3 durch den Prozessor 2 im normalen Betrieb nicht behindert werden darf. Im regulären Betriebsfall durchläuft die CPU 2 einen vollständigen Befehls-Datenzyklus, bei dem der nächste Befehl und damit Programmschritt in die CPU geladen wird, der dann den oder die zugehörigen Steuerbefehle, z.B. Lesen und/oder Schreiben, auf die zu schützende Speichereinrichtung 3 oder andere Datenquellen oder -senken auslöst. Das Erkennen dieses regulären Betriebszyklus erfolgt beispielsweise durch die Verknüpfung eines Zustandssignals s3 mit einem Bereichssignal s2. Als Zustandssignal s3 dient beispielsweise ein "Op-Code-Fetch"-Signal "OPC", das mit dem Bereichssignal CE_{memory i} logisch verknüpft wird. Das "Op-Code-Fetch"-Signal erzeugt die CPU immer dann, wenn ein Befehlszugriff erfolgt. Alle daraufhin folgenden Datenzugriffe auf den gleichen Bereich Bi der Speichereinrichtung 3 bis zum nächsten "Op-Code-Fetch"-Signal sollen ohne Beachtung der vorgesehenen Zugangsregelung zugelassen werden. Dies gilt nicht, wenn für diesen Bereich eine Sperrinformation vorgesehen ist und über die Datenschnittstelle 6 mittels eines "TEST"- oder "JTAG"-Signals ein Mitlesen oder Überschreiben versucht wird.

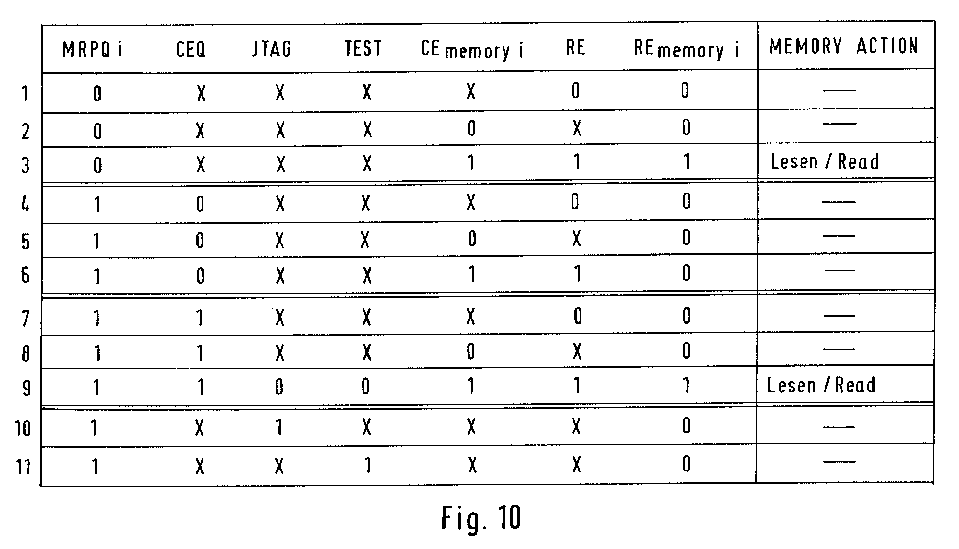

Ein irregulärer Speicherzugriff kann sich auch dadurch auszeichnen, daß er bestimmte Widersprüche zwischen den Signalen s2, s3, s4 enthält. Dies wird ebenfalls überprüft. Zum Lesen bzw. Schreiben erzeugt die CPU die bereits genannten Signale "RE" (=Read-Enable) bzw. "WE" (=Write-Enable) und der Adressendekoder 4 mittels der von der CPU gebildeten Adresse Ai das Speicher- Freigabesignal "CE" (=Chip-Enable) und/oder das Bereichssignal CE_{memory i}, die zur Aktivierung der Speichereinrichtung 3 bei vielen segmentierten Speichertypen erforderlich sind. Mittels einer Tabellendarstellung in Fig. 10 werden verschiedene Konstellationen zwischen den Signalen und deren Auswirkung auf die Zugangsprüfung später deutlicher dargestellt.

In Fig. 2 ist schematisch ein Beispiel für das Speicherschutzregister 7 (=MPCR) mit angenommenem Inhalt dargestellt. Das MPCR-Register 7 in Fig. 3 enthält 16 Speicherplätze, die jeweils im "0"- oder "1"-Zustand sind und insgesamt einem Datenwort mit 16 Bitstellen D0 bis D15 entsprechen. Unter der Annahme, daß die Speichereinrichtung 3 in acht unterschiedliche Speicherbereiche B0 bis B7 aufgeteilt ist, lassen sich somit aus dem 16-Bit-Datenwort zwei getrennte 8-Bit-Bereiche bilden. Ein Bereich definiert die jeweilige Lese-Zugangsberechtigungen und der andere die jeweiligen Schreib-Zugangsberechtigungen. Mit den ersten 8 Bit wird für jeden der 8 Speicherbereiche B0 bis B7 eine positive oder negative Lese-Zugangsberechtigung MRP0 bis MRP7 und mit den zweiten 8 Bit eine positive oder negative Schreib-Zugangsberechtigung MWP0 bis MWP7 festgelegt. Wenn als Datenumfang im Speicherschutzregister 7 weniger als 16 Bit zur Verfügung stehen, dann werden die 16 Zugangsberechtigungen in zwei getrennten Registern gespeichert.

Der für den jeweiligen Speicherbereich Bi gespeicherte Zustand "1" sperrt den Zugang und der Zustand "0" gibt ihn frei. Die Wahl, welcher Zustand im MPCR-Register 7 den freien Zugang oder die Sperrung definiert, ist an sich beliebig. Es muß jedoch sichergestellt sein, daß im unprogrammierten Zustand alle Bits des MPCR-Registers 7 einen Freigabezustand aufweisen, ansonsten wäre eine nachfolgende Programmierung des MPCR-Registers und der Speichereinrichtung 3 nicht mehr möglich. Wenn durch die Technologie ein bestimmter Zustand für das unprogrammierte Register 7 vorgegeben ist, dann wird dieser Zustand gegebenenfalls durch einen nachfolgenden Inverter oder durch das Auslesen des invertierten Registerinhaltes korrigiert.

In Fig. 3 ist schematisch ein Adressendekoder 4 dargestellt. Auf der einen Seite befinden sich die Eingänge für die parallel zugeführten Adressenbits AD0 bis ADn und auf der anderen Seite die Dekodierausgänge, die je nach dem dekodierten Speicherbereich B0 bis Bn jeweils ein Bereichssignal CE_{memory 0} bis CE_{memory n} abgeben. Ein globales Speicher-Freigabesignal CE (=Chip-Enable), das den gesamten Speicherbereich B betrifft, wird an einem separaten Ausgang abgegeben, wenn eine Adresse innerhalb des gesamten Adressenumfanges erkannt wird. Als Zahlenbeispiel sind im Hexadezimalformat mögliche Bereiche B0, B1, B2, Bn angegeben. Für die Eindeutigkeit der logischen Verknüpfung muß sichergestellt sein, daß jeweils nur ein einziges Bereichssignal CE_{memory i} im Zustand "1" ist.

Fig. 4 zeigt ein ähnliches Blockschaltbild wie Fig. 1. Als Speichereinrichtung 3 wird ein segmentierter Speichertyp verwendet, dessen einzelnen Bereiche Bi gezielt mit einem Bereichs-Lesesignal RE_{memory i} oder einem Bereichs-Schreibsignal WE_{memory i} angesteuert werden müssen. Zusätzlich ist nur ein globales Speicher-Freigabesignal CE erforderlich, das parallel an allen Bereichen B0 bis Bn anliegt. Das Bereichssignal CE_{memory i} aus dem Adressendekoder 4 ist der Verknüpfungseinrichtung 5.1 zugeführt, die dieses Signal mit den aus der CPU 2 stammenden Signalen RE oder WE kombiniert und als zugehöriges Lese-Bereichssignal RE_{memory i} oder Schreib-Bereichssignal bzw. WE_{memory i} abgibt. Nur wenn diese Signale mit dem entsprechenden Speicherbereich Bi übereinstimmen, kann dieser Bereich gelesen oder geschrieben werden. Dies wird sichergestellt, indem nur ein einziger Bereich Bi mit dem Lese- oder Schreib-Bereichssignal angesteuert wird. Die anderen Bereiche werden nicht angesteuert. Das Lese- oder Schreib-Bereichssignal wird selbstverständlich nur abgegeben, wenn die Zugangsberechtigungsprüfung in der Verknüpfungseinrichtung 5.1 mittels der Signale RE, WE, OPC, CE_{memory i}, MRPQi bzw. MWPQi und der nicht dargestellten Signale TEST und JTAG einen zulässigen Zugang feststellt. Bei einem unzulässigen Zugang, werden die Signale RE_{memory i} oder WE_{memory i} von der Verknüpfungseinrichtung 5.1 unterdrückt. Das globale Signal CE kann durch eine geeignete Torschaltung gegebenenfalls zusätzlich unterdrückt werden.

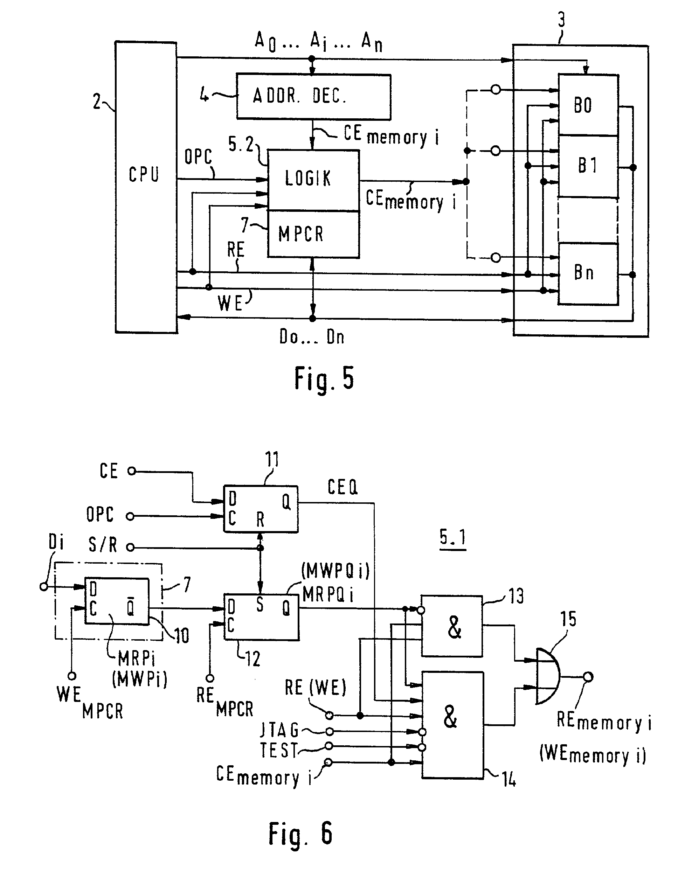

Das Blockschaltbild von Fig. 5 enthält wie Fig. 4 eine segmentierte Speichereinrichtung 3. Die Bereichsauswahl erfolgt jedoch im Unterschied zu Fig. 4 nicht durch ein Bereichs-Lesesignal oder ein Bereichs-Schreibsignal, sondern allein durch das Bereichssignal CE_{memory i} aus der logischen Verknüpfungseinrichtung 5. Das Lese- oder Schreibsignal RE bzw. WE der CPU 2 ist dabei einheitlich für die ganze Speichereinrichtung 3. Wie auch in Fig. 4 findet in der Verknüpfungseinrichtung 5.2 eine Zugangsprüfung über die vorhandenen Signale statt. Bei einem als unzulässig erkannten Zugriff wird das für den Zugriff in der Speichereinrichtung 3 erforderliche Bereichssignal CE_{memory i} gesperrt. Das globale Lese- oder Schreibsignal RE bzw. WE kann durch eine geeignete Torschaltung gegebenenfalls zusätzlich unterdrückt werden. In Fig. 5 ist dies nicht der Fall, die Signale RE, WE sind daher unter Umgehung der Verknüpfungseinrichtung 5.2 direkt der Speichereinrichtung 3 zugeführt.

In Fig. 6 ist die logische Verknüpfungseinrichtung 5.1 von Fig. 4 für den Lesefall deutlicher dargestellt. Damit die Speichereinrichtung 3 entsprechend dem Lesesignal RE von der CPU 2 gelesen werden kann, muß bei einem zulässigen Speicherzugriff die Verknüpfungseinrichtung ein Bereichs-Lesesignal RE_{memory i} der Speichereinrichtung zuführen. Vom Speicherschutzregister 7 ist lediglich eine einzige Speicherzelle 10 mit dem Symbol eines D-Flipflops dargestellt. Soll der Inhalt MRPi der Speicherzelle 10 geändert werden, wird über die am D-Eingang angeschlossene Datenleitung ein neues Datenbit Di in die Speicherzelle 10 geschrieben. Als Schreibtakt dient ein Register-Schreibsignal WE_{MPCR} aus der CPU 2. Ist das Speicherschutzregister 7 Teil eines Flash-Speichers, dann ist zu berücksichtigen, daß der unprogrammierte Speicherzustand dem Logikpegel "1" entspricht. Damit dieser Zustand in der nachgeschalteten Verknüpfungseinrichtung 5.1 nicht als Sperrinformation interpretiert wird, wird der Inhalt MRPi der Speicherzelle 10 invertiert ausgelesen. Im dargestellten D-Flipflop 10 entspricht dies einem Signalabgriff am invertierenden Ausgang. Eine gespeicherte "1" wird somit zu "0" und umgekehrt.

Die Prüfung ob ein Befehlszugriff oder eine Datenzugriff auf die Speichereinrichtung 3 vorliegt, erfolgt über ein D-Flipflop 11. Es wird mit dem OP-Code-Fetch-Signal OPC am C-Eingang getaktet und übernimmt damit das am D-Eingang vorhandene Speicher-Freigabesignal CE, sofern dieses vorhanden ist. Das am Q-Ausgang abgegriffene Ausgangssignal dieses Flipflops 11 ist ein Hilfssignal CEQ, das so lange den Zustand "1" aufweist, bis ein neuer Befehlszugriff OPC ohne das Speicher-Freigabesignal CE signalisiert wird. Der "1"-Zustand des Hilfssignals CEQ signalisiert somit, daß der letzte Befehlszugriff auf die Speichereinrichtung 3 erfolgte. Im Zustand "0" bewirkt das Hilfssignal CEQ letztendlich eine Sperrung des erforderlichen Bereichs-Lesesignals RE _{memory i}. Über einen Reset-Eingang R kann das Flipflop 11 ebenfalls mittels eines intern oder extern erzeugten Set-Resetsignals S/R in den Zustand "0" versetzt werden. Dies ist beim Einschalten der Versorgungsspannung sinnvoll, weil in diesem instabilen Betriebszustand kein Speicherzugriff erfolgen soll. Vorzugsweise wird für das D-Flipflop 11 ein Flipflop mit einem "transparent-latch"-Verhalten verwendet, damit beim Startvorgang, solange also noch kein Taktsignal OPC für den C-Eingang generiert wurde, der Q-Ausgang bereits das am D-Eingang anliegende Speicher-Freigabesignal CE sieht und den nachfolgenden UND-Gattern 13, 14 als aktuelle Information weiterleiten kann.

Die Prüfung, ob das Speicherschutzregister 7 eine Sperr- oder eine Freigabeinformation als Inhalt MRPi enthält, erfolgt durch ein D-Flipflop 12, dessen D-Eingang mit dem Datenausgang der Speicherzelle 10 verbunden ist. Die jeweils gültige Information MRPi wird mit einem Register-Schreibsignal RE_{MPCR} übernommen. Am Q-Ausgang wird es als Signal MRPQi zur weiteren Verknüpfung abgegeben. Das Signal ist auf den Inhalt einer einzigen Speicherzelle 10 bezogen und gilt nur für einen einzigen Speicherbereich Bi. Der Zustand "1" bzw. "0" dieses Signals MRPQi entspricht einer Sperrwirkung bzw. einer Freigabewirkung. Die Sperrwirkung "1" wird auch über das Set-Resetsignal S/R an einem Seteingang S des Flipflops 12 unabhängig von anderen Signalen erzwungen, beispielsweise bei dem erwähnten Netzstart.

Die wesentliche Prüfung, ob ein zulässiger oder unzulässiger Speicherzugriff vorliegt, erfolgt in zwei UND-Gattern 13, 14 mit Mehrfacheingängen. Einige dieser, mit kleinen Kreisen markierten Eingänge invertieren die zugeführten Signale vor der UND-Verknüpfung. Das erste UND-Gatter 13 ist im wesentlichen für diejenigen Fälle zuständig, in denen der Inhalt MRPi der zugeordneten Speicherzelle 10 einer Freigabeinformation entspricht. Es muß dann nur noch überprüft werden, ob der adressierte Speicherbereich CE _{memory i} auch der adressierten Speicherzelle 10 zugeordnet ist und ob auch tatsächlich ein Lesebefehl RE aus der CPU 2 vorliegt. Wenn alle drei Signale MRPQi, CEQ und RE den richtigen Zustand "0", "1", "1" haben, dann wird für den zugehörigen Bereich Bi mittels eines dem UND-Gatter 13 nachgeschalteten ODER-Gatters 15 das Bereichs-Lesesignal RE _{memory i} abgegeben.

Das zweite UND-Gatter 14 ist im wesentlichen für diejenigen Fälle zuständig, in denen der Inhalt MRPi der MPCR-Zelle 10 einer Sperrinformation entspricht, hier im Flash-Beispiel also eine "0" aufweist Wie oben wird auch überprüft, ob der adressierte Speicherbereich CEi auch der adressierten Speicherzelle 10 zugeordnet ist und ob ein von der CPU 2 generierter Lesebefehl RE vorliegt. Sind alle Bedingungen erfüllt, bedeutet dies, daß ein zulässiger Datenzugriff von der CPU 2 innerhalb eines vollständigen Befehls-und-Datenzyklus auf den gleichen Speicherbereich Bi vorliegt. Dies gilt indessen nur dann, wenn nicht über die externen Signale JTAG oder TEST ein Mitlesen der Daten versucht wird. Daher wird das Nichtvorhandensein dieser Signale ebenfalls in die UND-Verknüpfung durch das Gatter 14 einbezogen. Hierzu werden die negierenden Eingänge verwendet. Mittels der UND-Verknüpfung gibt das zweite UND-Gatter 14 über das nachgeschaltete ODER-Gatter 15 nur dann ein Bereichs-Lesesignal RE _{memory i} ab, wenn die Signale MRPQi, CEQ, RE, JTAG, TEST und CEi die logischen Pegel "1", "1", "1", "0", "0" und "1" aufweisen. In Fig. 6 sind zur verständlichen Darstellung der logischen Verknüpfungen die einzelnen Funktionsblöcke wie Flipflopstufen, UND- oder ODER-Gatter dargestellt. Diese können selbstverständlich ganz oder teilweise durch eine entsprechende andere Hard- oder Software ersetzt sein, wobei auch die Verknüpfung eine andere sein kann, sofern das Ergebnis identisch ist.

Die obige Funktionsbeschreibung der Verknüpfungseinrichtung 5.1 von Fig. 6 betrifft den Lesefall. Für den Schreibfall gilt indessen die gleiche Schaltung, nur sind einige Signale durch die entsprechenden Schreibsignale zu ersetzen. In der Darstellung stehen diese Signale MWPI, MWPQi, WE und WE _{memory i} in Klammern bei den zu ersetzenden Signalen.

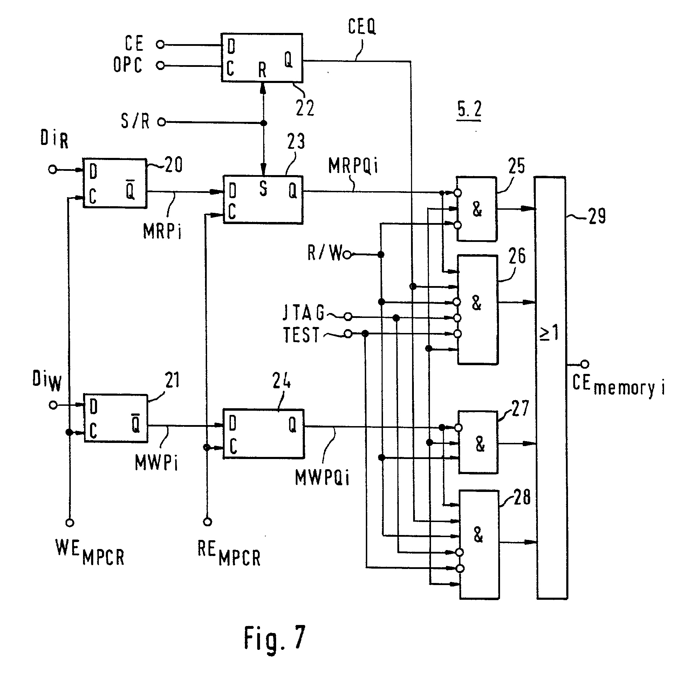

In Fig. 7 ist als Beispiel ein Teil der Verknüpfungseinrichtung 5.2 von Fig. 5 als Blockschaltbild mit den einzelnen Logikeinheiten dargestellt. Die Schaltung zeigt die Logikeinheiten und Signale, die einem einzigen Speicherbereich Bi zugeordnet sind. Für jeden Speicherbereich ist eine gleiche Anordnung erforderlich. Die Schaltung liefert ein Bereichssignal CE_{memory i}, wenn der Zugriff auf die nicht dargestellte Speichereinrichtung 3 zulässig ist. Die Verknüpfungseinrichtung 5.2 ist dabei der beschriebenen Verknüpfungseinrichtung 5.1 von Fig. 6 sehr ähnlich und enthält zwei MPCR-Speicherzellen 20 bzw. 21 für die Lese-Zugangsinformation MRPi bzw. die Schreib-Zuganginformation MWRPi. Das Hilfssignal CEQ wird wieder durch ein "transparentes" D-Flipflop 22 gebildet. Die Abfrage der Lese-Zugangsinformation aus der Zelle 20 erfolgt durch ein D-Flipflop 23 und der Schreib-Zugangsinformation aus der Zelle 21 durch ein D-Flipflop 24, die als Ausgangsignale ein MRPQ-Lese- bzw. MWPQ-Schreibsignal liefern.

Die Ermittlung der Lese-Zugangsberechtigung erfolgt im wesentlichen mittels der beiden UND-Gatter 25, 26 und die Ermittlung der Schreib-Zugangsberechtigung mittels der beiden UND-Gatter 27, 28. Alle UND-Gatter eines Bereiches Bi sind ausgangsseitig mittels eines ODER-Gatters 29 zusammengeführt, das ein Bereichssignal CE_{memory i} abgibt, wenn wenigstens eines der vier UND-Gatter den Logikzustand "1" aufweist. Die Unterscheidung des Lese- oder Schreibbetriebs kann über das Lese- und Schreibsignal RE, WE erfolgen. Beide Signale können jedoch wie in Fig. 7 auch als ein einziges Lese-Schreibsignal R/W zusammengefaßt werden, wobei der logische Pegel "0" Lesen und der logische Pegel "1" Schreiben bedeutet. Die UND-Gatter 25, 26, 27, 28 haben jeweils mindestens drei Eingänge, wobei invertierende Eingänge in Fig. 7 mit einem kleinen Kreis gekennzeichnet sind. Die Zuordnung der einzelnen Signale zu den einzelnen UND-Gattern ergibt sich ohne weiteres aus der Zeichnung. Selbstverständlich sind die logischen Verknüpfungen der digitalen Signale der Verknüpfungseinrichtung 5.2 ganz oder teilweise auch über eine entsprechende Hard- oder Software realisierbar. Sofern das Ergebnis gleich bleibt, kann auch die Logik eine andere sein.

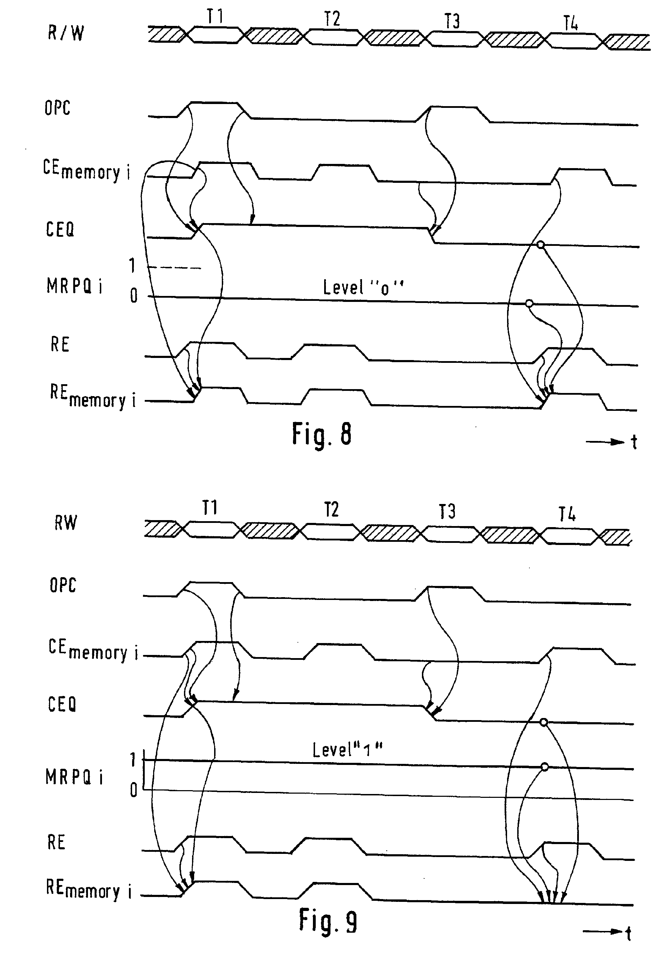

In Fig. 8 sind im Zeitdiagramm der zeitliche Verlauf einiger Signale der Verknüpfungseinrichtung beim Lesen dargestellt. Die dabei zugrunde gelegte Verknüpfungseinrichtung entspricht etwa der Verknüpfungseinrichtung 5.1 von Fig. 6 mit freigegebenem Speicherzugriff. Die erste Zeile zeigt ein kombiniertes Lese-Schreibsignal R/W, das in dem einen Logikzustand Lesen und in dem anderen Schreiben bedeutet. In den hell dargestellten Bereichen ist der Zustand des R/W-Signals gültig oder definiert (=valid), in den schraffierten Bereichen kann er beliebig sein. Die zugehörigen Takte T1, T2, T3 und T4 entsprechen den äquidistanten Bereichen des R/W-Signals. Das eigentliche Taktsignal ist nicht dargestellt. Statt der dargestellten Signale können selbstverständlich auch die invertierten oder inversen Signale verwendet werden, sofern die Logik entsprechend angepaßt wird.

Im ersten Takt T1 findet ein Befehlszugriff von der CPU 2 auf die Speichereinrichtung 3 statt. Dem entspricht das OP-Code-Fetch-Signal OPC in Zeile 2 und das Speicher-Bereichssignal CE_{memory i} in Zeile 3.

Dem Befehlszugriff folgt im zweiten Takt T2 ein Lesezugriff auf den gleichen Speicherbereich Bi. Dies wird durch das Speicher-Bereichssignal CE_{memory i} im Takt 2 signalisiert. Ein OPC-Signal wird nicht erzeugt, da es sich um einen Datenzugriff handelt. Andererseits gehört der Datenzugriff zu einem vollständigen Befehls-Datenzyklus auf den gleichen Speicherbereich Bi. Dies zeigt das Signal CEQ in der vierten Zeile an, das im ersten Takt T1 in den "1"-Zustand gesetzt wird erst wieder im dritten Takt T3 durch das neue OPC-Signal zurückgesetzt wird.

Im dritten Takt T3 beginnt ein neuer Befehls-Datenzyklus, der erstreckt sich jedoch nicht auf den vorherigen Speicherbereich Bi, sondern auf einen anderen Speicherbereich oder eine andere Datenquelle oder Datensenke.

Im Takt 4 wird angenommen daß in dem aktuellen Befehls-Datenzyklus irgendwie ein Zugriff auf den Speicherbereich Bi ausgelöst wird. Dem entspricht das Bereichssignal CE_{memory i} zum Zeitpunkt T4, ohne daß gleichzeitig das CEQ-Signal gesetzt ist. Ein derartiger Zugriff kann beispielsweise über einen nicht dargestellten TJAG-Befehl ausgelöst werden.

Die ersten vier Zeilen haben noch nichts mit einer positiven oder negativen Zugangsberechtigung zu tun, sondern mit diesen Signalen R/W, OPC, CE_{memory i} und CEQ wird der aktuelle Zustand des ganzen Systems beschrieben.

In der fünften Zeile ist das Lese-Zugangsberechtigungssignal MRPQi für den Bereich Bi angegeben. Es hat während des gesamten Zeitablaufs den logischen Pegel "0" und bedeutet daher einen freien Lesezugang auf den Speicherbereich Bi.

Die sechste Zeile zeigt den zeitlichen Verlauf des globalen Lesesignals RE, das immer dann von der CPU 2 aktiviert wird, wenn sie Befehle oder Daten aus der Speichereinrichtung 3 abfrägt, also während des ersten, zweiten und vierten Taktes. Der Befehlsabruf im dritten Takt T3 löst keinen Lesebefehl RE aus, weil der mit dem zweiten OP-Code-Fetch-Signal gestartete Befehls-Datenzyklus nicht auf die Speichereinrichtung 3 zugreift.

Die sechste Zeile zeigt schließlich das resultierende Lese-Bereichssignal RE_{memory i}, das bis auf eine kleine Zeitverzögerung infolge der Signallaufzeit durch die logischen Schaltstufen identisch mit dem Lesesignal RE ist, weil eine Sperrwirkung für diesen Speicherbereich Bi für das Lesen nicht vorgesehen ist. Damit die gegenseitige Abhängigkeit der Signale im Zeitdiagramm erkennbar wird, enthält Fig. 8 und Fig. 9 im Bereich einiger Signalwechsel Pfeile, um die auslösenden und resultierenden Signalwechsel und Signalzustände zu kennzeichnen.

Das Zeitdiagramm von Fig. 9 ist ähnlich zum Zeitdiagramm von Fig. 8. Der Hauptunterschied besteht darin, daß die Lese-Zugangsberechtigung MRPQi in Zeile 5 den logischen Zustand "1" aufweist und damit den Speicherbereich Bi für unerlaubte Lesezugriffe sperrt.

Damit ein Vergleich stattfinden kann, sind in den vier Takten T1, T2, T3 und T4 des Zeitdiagramms von Fig. 9 die selben Vorgänge beschrieben wie in Fig. 8. Die vier ersten Zeilen mit den Signalen R/W, OPC, CE_{memory i} und CEQ sind daher in Fig. 8 und Fig. 9 identisch. Erst mit dem MRPQi-Signal der fünften Zeile wird das Zeitdiagramm unterschiedlich.

Der erste und zweite Takt T1, T2 umfaßt einen regulären Befehls-Datenzyklus auf den gleichen Speicherbereich Bi. Der von der CPU 2 ausgelöste Lesevorgang im ersten und zweiten Takt T1, T2 soll aber trotz der Sperrinformation unbehindert ablaufen. Die resultierenden Lese-Bereichssignale RE_{memory i} im ersten und zweiten Takt werden somit wie in Fig. 8 gebildet Anders sieht es bei dem Speicherzugriffsversuch im vierten Takt T4 aus. Daß es sich nicht um einen regulären Zugriff handelt ergibt sich aus dem "0"-Pegel des Hilfssignals CEQ. Dieses Signal in Verbindung mit dem Sperrsignal MRPQi sperrt das Bereichs-Lesesignal RE_{memory i}, so daß ein Lesen im Bereich Bi trotz richtigem Bereichssignal CE_{memory i} nicht möglich ist.

Fig. 10 zeigt in Tabellenform die Funktionsweise der Verknüpfungseinrichtung 5.1 von Fig. 6. Die einzelnen Zeilen zeigen den jeweiligen Logikzustand mit "0"- und "1" der angegebenen Signale. Die einzelnen Spalten enthalten dabei nacheinander folgende Signale: Die bereichsbezogene Lese-Zugangsberechtigung MRPi, das JTAG-Signal, das TEST-Signal, das Speicher-Bereichssignal CE_{memory i}, das globale Lesesignal RE und schließlich das Bereichs-Lesessignal RE_{memory i.} Die letzte Spalte zeigt die aus den vorausgehenden Signalen resultierende Aktion: "Lesen" oder keine Leseaktion.

In den ersten drei Zeilen hat die Lese-Zugangsberechtigung MRPQᵢ den Zustand "0" und dies bedeutet, daß der zugehörige Speicherbereich Bᵢ für das Lesen nicht gesperrt sein soll, sondern einen freien Zugriff ermöglicht. Der Zustand der Signale CEQ, JTAG und TEST ist für diese Zugangsberechtigung beliebig. Die Verknüpfungseinrichtung überprüft jedoch, ob ein Widerspruch zwischen dem Bereichssignal CE_{memory i} und dem globalen Lesesignal RE vorliegt. So wird in Zeile 1 nicht gelesen, weil das Signal RE inaktiv ist. In Zeile 2 wird nicht gelesen, weil das Bereichssignal CE_{memory i} inaktiv ist. Erst in der 3. Zeile ist das Bereichssignal und das globale Lesesignal gesetzt, so daß das Bereichs-Lesesignal RE_{memory i} mit dem Zustand "1" abgegeben wird, und somit die Speichereinrichtung 3 an der adressierten Stelle gelesen wird. Die logischen Verknüpfungen der Zeilen 1, 2 und 3 finden gemäß Fig. 6 in dem UND-Gatter 13 statt.

In den Zeilen 4 bis 9 ist der Leseschutz aktiv und entsprechend befindet sich das Signal MRBQᵢ im "1"- Zustand. Die logische Verknüpfung der Signale in diesen Zeilen muß so ausgebildet sein, daß jeder Leseversuch auf den zugehörigen Speicherbereich Bᵢ unterbunden wird, es sei denn, es handelt sich um den oben beschriebenen regulären Zugriff, bei dem jedoch diese Signale JTAG und TEST inaktiv, also im Zustand "0" sein müssen - letzteres zeigt Zeile 9. Daß es sich bei Zeile 4 nicht um einen regulären Zugriff handelt, geht beispielsweise schon daraus hervor, daß das globale Schreibsignal RE inaktiv ist. In Zeile 5 handelt es sich ebenfalls nicht um einen regulären Zugriff, weil das Bereichssignal CE _{memory i} für diesen Bereich Bᵢ nicht gesetzt ist, weil die vom Prozessor ausgegebene Adresse nicht auf diesen Speicherbereich Bᵢ verweist. In Zeile 6 wird der Zugriff verweigert, weil ein Widerspruch zwischen dem Hilfssignal CEQ und dem Bereichssignal CE _{memory i} vorliegt. Auf irgendeine Weise ist zwar ein richtiges Bereichssignal vorhanden, der Prozessor hat jedoch eine Adresse ausgegeben, die überhaupt nicht mit der Speichereinrichtung 3 verknüpft ist. Ein unzutreffendes Hilfssignal CEQ mit dem Zustand "0" liegt auch in Zeile 4 und 5 vor und kann daher auch dort in die Erkennung des irregulären Betriebszustandes einbezogen werden.

In den Zeilen 7 bis 9 hat das Hilfssignal CEQ den Zustand "1" und läßt somit keinen Widerspruch zum Gesamtspeicherbereich B erkennen. In Zeile 7 wird indessen der Lesezugriff verweigert, weil das Lesesignal RE inaktiv ist. In Zeile 8 wird der Lesezugriff verweigert, weil das Bereichssignal CE_{memory i} inaktiv ist.

Zeile 9 erlaubt wie bereits erwähnt das Lesen, obwohl der Speicherbereich Bᵢ gesperrt ist, weil ein regulärer Speicherzugriff vom Prozessor 2 vorliegt. Sowie jedoch in diesem Zustand das unerlaubte Mitlesen über die Signale JTAG oder TEST versucht wird, wird das Lesen unterbunden. Diese beiden Signale müssen sich daher im inaktiven Zustand befinden, der hier durch "0" gekennzeichnet ist. Dies geht auch aus den Zeilen 10 und 11 hervor, die bei einem gesperrten Speicherbereich das Lesen unterbinden, wenn eines oder beide dieser Signale aktiv sind. Der logische Zustand der übrigen Signale ist dabei beliebig. Die in der Tabelle dargestellte Speicheraktion in der letzten Spalte entspricht dem Zustand des Bereichs-Lesesignals RE_{memory i}. Die logischen Verknüpfungen der Zeilen 4 bis 11 lassen sich durch eine UND-Verknüpfung realisieren. Dies entspricht dem UND-Gatter 14 von Fig. 6.

### Bezugszeichenliste

- 1: Verriegelungsschaltung
- 2: Prozessor(einheit) (CPU=Central Processor Unit)
- 3: Speichereinrichtung
- 4: Adressendekoder
- 5: (logische) Verknüpfungseinrichtung
- 6: extern zugängliche Datenschnittstelle
- 7: Speicherschutzregister (MPCR= Memory Protection Control Register)
- 10: (MPCR)-Speicherzelle
- 11: D-Flipflop
- 12: D-Flipflop
- 13: erstes UND-Gatter
- 14: zweites UND-Gatter
- 15: ODER-Gatter
- 22: D-Flipflop (transparent latch)
- 29: ODER-Gatter
- 20, 21: (MCPR)-Speicherzelle
- 23, 24: D-Flipflop
- 25, 26, 27, 28: UND-Gatter
- 5.1 5.2: weitere Verknüpfungseinrichtungen
- AD0, AD1, ADn: Eingang für Adressenbus
- Ai, A0, A1, An: Adressen
- Bi, B0, B1, B2: Speicherbereich
- C: Takteingang / C-Eingang
- CE: (globales) Speicher-Freigabesignal (=Chip Enable)
- CE memory i: Speicherbereichssignal
- CEQ: Hilfssignal
- D iR: Datenstelle (für Lese-Zugangsberechtigung)
- D iW: Datenstelle (für Schreib-Zugangsberechtigung)
- D(i, 0, 1, n): Daten
- d1: Schnittstellen-Ausgangssignal
- JTAG: Zugangssignal zu Schnittstelle JTAG
- MRP(i, 0, 1,2): Lese-Zugangsberechtigung
- MWP(i, 0, 1, 2): Schreib-Zugangsberechtigung
- OPC: Befehlszyklus-Zustandssignal (=Op-Code-Fetch)
- R: Reseteingang
- R/W: kombiniertes Lese-Schreibsignal
- RE: Lesesignal (=Read Enable)
- RE memory i: Bereichs-Lesesignal
- RE MPCR: Register-Lesesignal
- S: Seteingang
- S/R: Set-Resetsignal
- s1: externe Signale
- s2, s3, s4: interne Signale
- T: Zeit
- T1, T2, T3, T4: 1. 2. 3. 4. Takt
- TEST: Zugangssignal zu Schnittstelle TEST
- WE: Schreibsignal (=Write Enable)
- WE memory i: Bereichs-Schreibsignal
- WE MPCR: Register-Schreibsignal

## Patentansprüche

1. Verriegelungsschaltung (1), die mit einem Prozessor und einer Speichereinrichtung (3), die insbesondere eine gemeinsame Baueinheit bilden, gekoppelt ist und einen unzulässigen, Zugriff auf die Speichereinrichtung (3) verhindert, dabei sind einer Verknüpfungseinrichtung (5) zur Erkennung des unzulässigen Speicherzugriffs über logische Verknüpfungen interne und externe Signale (s2, s3, s4; s1), die der Steuerung des Prozessors (2) und der Speichereinrichtung (3) dienen oder deren jeweiligen Betriebszustand signalisieren, zugeführt und bei einem als unzulässig erkannten Speicherzugriff sperrt die Verknüpfungseinrichtung (5) den unzulässigen Speicherzugriff.

2. Verriegelungsschaltung (1) nach Anspruch 1, **dadurch gekennzeichnet, daß** die Sperrung des Speicherzugriffs mittels einer Sperrung von mindestens einem Signal (S5) zur Speichersteuerung und/oder mittels einer Sperrung einer extern zugänglichen Datenschnittstelle (6) erfolgt.

3. Verriegelungsschaltung (1) nach Anspruch 1 oder 2, **dadurch gekennzeichnet, daß** der unzulässige externe Speicherzugriff eine zu schützende Lesefunktion und/oder eine zu schützende Schreibfunktion in der gesamten Speichereinrichtung (3) oder in einzelnen Speicherbereichen (B0... Bi... Bn) betrifft, wobei die zu schützende Schreibfunktion auch den Schutz von Speicherinhalten gegen ein unzulässiges Löschen mit einschließt.

4. Verriegelungsschaltung (1) nach Anspruch 3, **dadurch gekennzeichnet, daß** die Zugangsberechtigung für den Speicherzugriff innerhalb jedes vorgegebenen Speicherbereiches (B0 bis Bn) einheitlich ist.

5. Verriegelungsschaltung (1) nach Anspruch 4, **dadurch gekennzeichnet, daß** die jeweiligen Speicherbereiche (Bi) durch Bereichssignale (= CE_{memory i}) definiert sind und daß die Speicherbereiche (Bi) jeweils mit einer Zugangsberechtigung verkoppelt sind.

6. Verriegelungsschaltung (1) nach Anspruch 5, **dadurch gekennzeichnet, daß** die Zugangsberechtigung des jeweiligen Speicherbereichs (Bi) als Lese- bzw. Schreibzugangsberechtigung (MRPᵢ, MWPᵢ) in einem Speicherschutzregister (7) enthalten ist.

7. Verriegelungsschaltung (1) nach Anspruch 6, **dadurch gekennzeichnet, daß** sich das Speicherschutzregister (7) in einem geschützten Bereich (Bi) der Speichereinrichtung (3) befindet.

8. Verriegelungsschalung (1) nach einem der Ansprüche 1 bis 7, **dadurch gekennzeichnet, daß** in der Verknüpfungseinrichtung (5) ein vom Prozessor (2) ausgelöster Lese- oder Schreibbefehl (RE, WE) mit anderen internen oder externen Signalen (s2, s3, s4; s1) verknüpft ist.

9. Verriegelungsschaltung (1) nach einem der Ansprüche 1 bis 7, **dadurch gekennzeichnet, daß** in der Verknüpfungseinrichtung (5) Zugangssignale (z.B. TEST, JTAG) zur Aktivierung der extern zugänglichen Datenschnittstelle (6) mit anderen internen oder externen Signalen (s2, s3, s4; s1) verknüpft ist.

10. Verriegelungsschaltung (1) nach einem der Ansprüche 1 bis 7, **dadurch gekennzeichnet, daß** in der logischen Verknüpfungseinrichtung (5) das Bereichssignal (CE_{memory i}) mit anderen internen oder externen Signalen (s2, s3, s4; s1) verknüpft ist.

11. Verriegelungsschaltung (1) nach einem der Ansprüche 1 bis 7, **dadurch gekennzeichnet, daß** in der Verknüpfungseinrichtung (5) ein vom Prozessor (2) erzeugtes Befehls- (OPC) oder Datenzyklus-Zustandssignal mit anderen internen oder externen Signalen (s2, s3, s4; s1) verknüpft ist.
